## Europäisches Patentamt

## European Patent Office

## Office européen des brevets

(11) Veröffentlichungsnummer: **0 105 441**
**B1**

(12) **EUROPÄISCHE PATENTSCHRIFT**

(45) Veröffentlichungstag der Patentschrift:
22.06.88

(51) Int. Cl.⁴: **H 04 Q 3/42,** H 04 M 1/27

(21) Anmeldenummer: 83109571.6

(22) Anmeldetag: 26.09.83

(54) Fernsprechvermittlungssystem für öffentliche oder private Wählnetze mit zumindest einer zentralen Wählinformations-Aufnahme/Verarbeitungs-Einrichtung.

(30) Priorität: 30.09.82 DE 3236272

(43) Veröffentlichungstag der Anmeldung:
18.04.84 Patentblatt 84/16

(45) Bekanntmachung des Hinweises auf die Patenterteilung:
22.06.88 Patentblatt 88/25

(84) Benannte Vertragsstaaten:
AT CH DE FR GB LI NL SE

(56) Entgegenhaltungen:
EP - A - 0 045 941
GB - A - 492 514

PATENTS ABSTRACTS OF JAPAN, Band 6, Nr. 164
(E-127)[1042], 27. August 1982
PROCEEDINGS OF THE 6th INTERNATIONAL
CONFERENCE ON COMPUTER COMMUNICATION,
7.-10. September 1982, London, Seiten 583-588,
North-Holland Publishing Company, Amsterdam, NL,
A.R. WILLIS: "Voice I/O system design"
PATENTS ABSTRACTS OF JAPAN, Band 4, Nr. 157
(E-32)[639], 4. November 1980, Seite 34 E 32

(73) Patentinhaber: Siemens Aktiengesellschaft Berlin und
München, Wittelsbacherplatz 2, D-8000 München 2 (DE)

(72) Erfinder: Unterberger, Hans, Dr. Ing., Groschenweg 48a,
D-8000 München 82 (DE)
Erfinder: Steuer, Thomas, Dipl.-Ing.,
Hogenbergstrasse 11, D-8000 München 21 (DE)
Erfinder: Littel, Bernhard, Dipl.-Ing.,
Stresemannstrasse 10, D-8000 München 90 (DE)
Erfinder: Das, Gupta Probodh, Lohengrinstrasse 32,
D-8034 Germering (DE)
Erfinder: Lang, Manfred, Dr. rer. nat., Andreasstrasse 16,
D-8029 Sauerlach (DE)
Erfinder: v. Sanden, Dieter, Dr. Ing. E. h. Dipl.-Phys.,
Jaiserstrasse 50, D-8023 Pullach (DE)

## Beschreibung

Die vorliegende Erfindung betrifft ein Fernsprechvermittlungssystem für private Wählnetze mit zumindest einer zentralen Wählinformations-Aufnahme/Verarbeitungs-Einrichtung, bei dem der zentralen Wählinformations-Aufnahme/Verarbeitungseinrichtung eine Spracherkennungs/Auswerte-Einrichtung vorgeordnet ist.

Die Eingabe von Wählinformationen in Vermittlungssysteme durch Drücken von Tasten oder Drehen einer Nummernschalterscheibe stellt einen Codierungsvorgang dar, durch den ein Zielwunsch in eine für ein Vermittlungssystem interpretierbare Form gebracht wird.

Fortschritte auf dem Gebiet der automatischen Spracherkennung haben zu Überlegungen geführt, in welcher Art eine Eingabe von akustischen Wählinformationen in Vermittlungseinrichtungen realisierbar ist. Ob dabei der Zielwunsch weiterhin in Form von Ziffernfolgen oder durch Namens- bzw. Zielortangabe geäussert wird, hängt im wesentlichen von der Leistungsfähigkeit der Spracherkennungseinrichtung und den technischen Gegebenheiten des betreffenden Vermittlungssystems ab. Mit der automatischen Spracherkennung würde für Kommunikationssysteme eine vorteilhafte Alternative zur Benutzung von Drehnummernschaltern bzw. Wähltasten geschaffen werden.

Automatische Spracherkennungseinrichtungen sind an sich aus dem Stand der Technik bekannt. Dem Fachmann ist ferner bekannt, dass die Erkennungseigenschaften einer derartigen Spracherkennungseinrichtung durch entsprechenden Software- und/oder Hardware-Aufwand derart weiterentwickelt werden können, dass ein für die eingangs genannten Zwecke ausreichendes Spracherkennungsvermögen erreicht werden kann. Beim gegenwärtigen Stand der Technik ist es insbesondere durch die VLSI-Technik und dadurch, dass Software simulations- und computergesteuert entwickelt werden kann, möglich geworden, derartige Spracherkennungseinrichtungen zu realisieren. Der hohe Rechneraufwand, der allerdings für eine derartige Spracherkennungseinrichtung erforderlich ist, macht deutlich, dass eine derartige Spracherkennungseinrichtung beim gegenwärtigen Stand der Technik aus Wirtschaftlichkeitsgründen an zentraler Stelle eines Vermittlungssystems anzuordnen wäre.

Aus der EP-A-0 045 941 ist entnehmbar, dass sich das darin beschriebene Fernsprechvermittlungssystem auf öffentliche oder private Wählnetze mit zumindest einer zentralen Wählinformations-Aufnahme/Verarbeitungs-Einrichtung bezieht. Dieser Druckschrift ist desweiteren zu entnehmen, dieser zentralen Wählinformations-Aufnahme/Verarbeitungs-Einrichtung eine Spracherkennungs/Auswerte-Einrichtung vorzuordnen, wobei zu entnehmen ist, dass die Spracherkennungs/Auswerte-Einrichtung aus einem Spracherkennungsgerät und einem Auswerte-Prozessor besteht. Die von einem Teilnehmer eingesprochene Information, beispielsweise eine Wählinformation, wird aufgenommen und analysiert, und das Analyseergebnis wird an einen Wahlaufnahmesatz, der einem Auswerte-Prozessor entspricht, abgegeben. Der als Digitalinformation ausgedrückte Zielwunsch des Teilnehmers wird demnach in eine an die zentrale Wählinformations-Aufnahme/Verarbeitungs-Einrichtung angepasste Informationsform umgesetzt und an die letztgenannte Einrichtung ausgegeben. Danach wird der betreffende Verbindungsaufbau in herkömmlicher Weise wie durch Eingabe des Zielwunsches mittels Wählnummernschalter oder Wähltastatur abgewickelt.

Aus der Druckschrift «Proceedings of the 6th International Conference on Computer Communication», 07. bis 10. September 1982, Seiten 583 bis 588 (Dokument 2) ist der Hinweis zu entnehmen, in einem sprachgesteuerten Fernsprechvermittlungssystem einen Sprachsynthesizer zu verwenden, der beispielsweise Auskünfte, Anweisungen, Instruktionen usw. in gesprochener Form aufgrund eingesprochener Ziel-, Auskunfts- oder Fernsprechdienstwünsche an die betreffenden Teilnehmer ausgibt. Dabei werden einem individuellen Teilnehmer zugeordnete Vergleichs-Sprachanweisungen in entsprechenden Speichern abgelegt. Bei Erkennen der Sprachanweisung werden Steuersignale an den Wahlaufnahmesatz weitergeleitet.

Der vorliegenden Erfindung liegt die Aufgabe zugrunde, ein Fernsprechvermittlungssystem für private Wählnetze mit zumindest einer zentralen Wählinformations-Aufnahme/Verarbeitungs-Einrichtung zu schaffen, das über den Stand der Technik hinaus Einrichtungen zur Vereinfachung und Verbesserung der Kommunikation zwischen Benutzer und Vermittlungssystem und zur Prüfung von Teilnehmerberechtigungen enthält.

Die der vorliegenden Erfindung zugrundeliegende Aufgabe wird durch ein Fernsprechvermittlungssystem nach dem Oberbegriff des Patentanspruchs, das durch die in dessen kennzeichnendem Teil angegebenen Merkmale gekennzeichnet ist, gelöst.

Vorteilhafte Weiterbildungen der Erfindung sind durch die in den Unteransprüchen angegebenen Merkmale gekennzeichnet.

Die Erfindung wird im folgenden anhand einer Figur beschrieben.

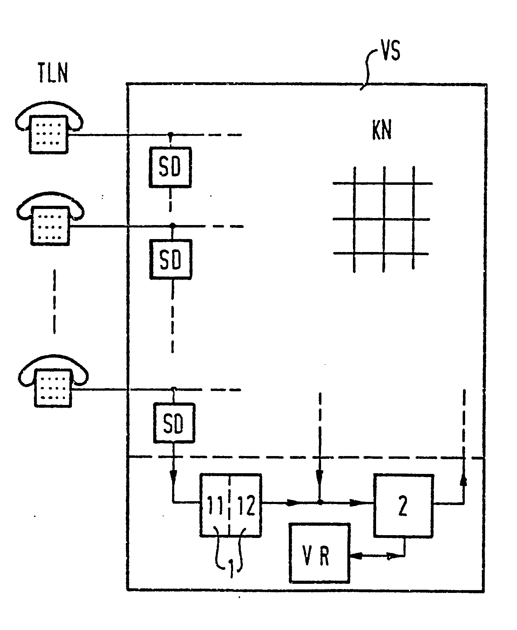

Die Figur zeigt eine schematische Darstellung eines Fernsprechvermittlungssystems VS mit daran angeschlossenen Teilnehmern TLN in Form eines Blockschaltbildes. Das Fernsprechvermittlungssystem VS enthält in an sich bekannter Weise ein Koppelnetz KN, das vorzugsweise zentral durch einen Vermittlungsrechner VR und eine Wählinformations-Aufnahme/Verarbeitungs-Einrichtung 2, beispielsweise in Form eines Arbeitsfeldsteuerwerks, gesteuert wird. Der Wählinformations-Aufnahme/Verarbeitungs-Einrichtung 2 können die Wählinformationen von den Teilnehmern TLN über das Koppelnetz KN in herkömmlicher Weise zugeführt werden.

Für ein solches Fernsprechvermittlungssystem für private Wählnetze mit zumindest einer zentralen Wählinformations-Aufnahme/Verarbeitungs-Einrichtung ist vorgesehen, dass der zentralen Wählinformations-Aufnahme/Verarbeitungs-Einrichtung 2 eine Spracherkennungs/Auswerte-Einrichtung 1 vorgeordnet ist, die aus einem Spracherkennungsgerät 11 und einem Auswerte-Prozessor 12 besteht. Das Spracherkennungsgerät 11 enthält eine erste Teileinrichtung, die eine von einem Teilnehmer TLN eingesprochene Information, beispielsweise eine Wählinformation, in an sich bekannter Weise aufnimmt und analysiert, und eine zweite Teileinrichtung, die das Analyseergebnis in an sich ebenfalls bekannter Weise in eine Digitalinformation umsetzt und diese an den Auswerte-Prozessor 12 abgibt. Der Auswerte-Prozessor 12 setzt den in der Digitalinformation ausgedrückten Zielwunsch des Teilnehmers (TLN) in eine an die zentrale Wählinformations-Aufnahme/Verarbeitungs-Einrichtung 2 angepasste Informationsform um und gibt diese an letztere aus, wonach der betreffende Verbindungsaufbau in herkömmlicher Weise wie durch Eingabe des Zielwunsches mittels Wählnummernschalter oder Wähltastatur abgewickelt wird.

Der Auswerte-Prozessor 12 enthält spezielle Auswerte-Bausteine zur Umsetzung standardisierter Zielwunsch-Begriffe, beispielsweise für «Polizei», «Notarzt», «Wetter», «Lotto» u.dgl. Er enthält zusätzlich vorzugsweise spezielle Bausteine zur Umsetzung standardisierter Zielwunsch-Begriffe, die Fernverkehrs-Ausscheidungskennzahlen, wie beispielsweise für «USA», «Frankreich» oder «Columbus Ohio», «Grenoble» oder «Frankfurt/Main» usw. repräsentieren.

Der Auswerte-Prozessor 12 kann ausserdem spezielle Bausteine zur Umsetzung standardisierter Begriffe für Fernsprechdienste wie «Rufweiterschaltung», «Anklopfen», «Anrufwiederholung», «Rückfrage und Gesprächsumlegung», «Gebührenübernahme» usf. enthalten.

Von einem im allgemeinen aus Gründen der Gebührenerfassung und/oder der Prüfung von Berechtigungen vorhandenen Identifizierer wird die Ruf- oder Anschlussnummer eines eine Verbindung wünschenden Teilnehmers TLN an den Auswerte-Prozessor 12 geliefert, der dann aufgrund des von diesem Teilnehmer geäusserten Zielwunsches die Zielberechtigung prüft. Dazu ist vorteilhafterweise vorgesehen, dass der Auswerte-Prozessor 12 eine Liste enthält, in der die individuellen Berechtigungen der Teilnehmer eingetragen sind und auf die der Auswerte-Prozessor zum Zwecke der Berechtigungsprüfung zugreift.

Ausserdem ist vorgesehen, dass der Auswerte-Prozessor 12 einen Sprachsynthesizer enthält, der Auskünfte, Anweisungen, Instruktionen usw. in gesprochener Form aufgrund eingesprochener Ziel-, Auskunfts- oder Fernsprechdienstwünsche an die betreffenden Teilnehmer ausgibt.

Den Teilnehmern TLN können individuelle Sprachdetektoren SD zum Erfassen bestimmter standardisierter Begriffe, wie beispielsweise «acht», zur Steuerung eines Kurzrufnummern-Verbindungsaufbaus in an sich bekannter Weise zugeordnet sein, wobei die Sprachdetektoren SD fallweise entsprechende Steuersignale aufgrund des betreffenden gesprochenen Begriffs mittelbar oder unmittelbar in die Wahlinformations-Aufnahme/Verarbeitungs-Einrichtung 1 eingeben.

Ausserdem kann vorteilhafterweise vorgesehen sein, dass den Teilnehmern TLN jeweils eine individuelle Steuertaste («Flash-Taste») zugeordnet ist, die in oder bei der Teilnehmerstation angeordnet ist und mittels derer der Teilnehmer eine weitere Spracheingabe nach erfolgter Spracheingabe unterdrücken kann oder dem betreffenden zentralen Einrichtungen eine erneute Spracheingabe signalisieren kann.

Zum Betrieb eines Fernsprechvermittlungssystems nach der Erfindung bietet sich am zweckmässigsten an, dass der betreffende Teilnehmer zur Spracheingabe das in den Handapparat seiner Teilnehmerstation eingebaute Mikrofon ggf. nach vorheriger Betätigung der Steuertaste («Flash-Taste») benutzt.

## Patentansprüche

1. Fernsprechvermittlungssystem für private Wählnetze mit zumindest einer zentralen Wählinformations-Aufnahme/Verarbeitungs-Einrichtung, bei dem der zentralen Wählinformations-Aufnahme/Verarbeitungs-Einrichtung (2) eine Spracherkennungs/Auswerte-Einrichtung (1) vorgeordnet ist, dadurch gekennzeichnet, dass die Spracherkennungs/Auswerte-Einrichtung aus einem Spracherkennungsgerät (11) und einem Auswerte-Prozessor (12) besteht, dass das Spracherkennungsgerät (11) eine erste Teileinrichtung, die eine von einem Teilnehmer (TLN) eingesprochene Wählinformation und gegebenenfalls weitere Informationen, aufnimmt und analysiert, und eine zweite Teileinrichtung enthält, die das Analyseergebnis in eine Digitalinformation umsetzt und diese an den Auswerte-Prozessor (12) abgibt, dass von einem im allgemeinen aus Gründen der Gebührenerfassung und/oder der Prüfung von Berechtigungen vorhandenen Identifizierer die Ruf- oder Anschlussnummer eines eine Verbindung wünschenden Teilnehmers (TLN) an den Auswerte-Prozessor (12) geliefert wird, der dann aufgrund des von diesem Teilnehmer geäusserten Zielwunsches die Zielberechtigung prüft, dass der Auswerte-Prozessor (12) einen Sprachsynthesizer enthält, der Auskünfte, Anweisungen, Instruktionen usw. in gesprochener Form aufgrund eingesprochener Ziel-, Auskunfts- oder Fernsprechdienstwünsche an die betreffenden Teilnehmer ausgibt, und dass im Falle der Zielberechtigung der Auswerte-Prozessor (12) den in der Digitalinformation ausgedrückten Zielwunsch des Teilnehmers (TLN) in eine an die zentrale Wählinformations-Aufnahme/Verarbeitungs-Einrichtung (2) angepasste Informationsform umsetzt und an letztere ausgibt, wonach der betreffende Verbindungsaufbau in herkömmlicher Weise analog zu einer Eingabe des Zielwunsches mittels Wählnummernschalter oder Wähltastatur abgewickelt wird.

2. Fernsprechvermittlungssystem nach Anspruch 1, dadurch gekennzeichnet, dass der Auswerte-Prozessor (12) spezielle Auswerte-Bausteine zur Umsetzung standardisierter Zielwunsch-Begriffe, beispielsweise für «Polizei», «Notarzt», «Wetter», «Lotto» u.dgl., enthält.

3. Fernsprechvermittlungssystem nach Anspruch 1, dadurch gekennzeichnet, dass der Auswerte-Prozessor (12) spezielle Bausteine zur Umsetzung standardisierter Zielwunsch-Begriffe enthält, die Fernverkehrs-Ausscheidungskennzahlen, wie beispielsweise «USA», «Frankreich» oder «Columbus Ohio», «Grenoble» oder «Frankfurt/Main» usw., repräsentieren.

4. Fernsprechvermittlungssystem nach Anspruch 1, dadurch gekennzeichnet, dass der Auswerte-Prozessor (12) spezielle Bausteine zur Umsetzung standardisierter Begriffe für Fernsprechdienste wie ·«Rufweiterschaltung», «Anklopfen», «Anrufwiederholung», «Rückfrage und Gesprächsumlegung», «Gebührenübernahme» usf. enthält.

5. Fernsprechvermittlungssystem nach Anspruch 1, dadurch gekennzeichnet, dass der Auswerte-Prozessor (12) eine Liste enthält, in der die individuellen Berechtigungen der Teilnehmer eingetragen sind und auf die der Auswerte-Prozessor zum Zwecke der Berechtigungsprüfung zugreift.

6. Fernsprechvermittlungssystem nach Anspruch 1, dadurch gekennzeichnet, dass den Teilnehmern (TLN) individuelle Sprachdetektoren (SD) zum Erfassen bestimmter standardisierter Begriffe, wie beispielsweise «acht», zur Steuerung eines Kurzrufnummern-Verbindungsaufbaus zugeordnet sind, wozu die Sprachdetektoren (SD) fallweise entsprechende Steuersignale aufgrund des betreffenden gesprochenen Begriffs mittelbar oder unmittelbar in die Wählinformations-Aufnahme/Verarbeitungs-Einrichtung (1) eingeben.

7. Fernsprechvermittlungssystem nach Anspruch 1, dadurch gekennzeichnet, dass den Teilnehmern (TLN) jeweils eine individuelle Steuertaste («Flash-Taste») zugeordnet ist, die in oder bei der Teilnehmerstation angeordnet ist und mittels derer der Teilnehmer eine weitere Spracheingabe nach erfolgter Spracheingabe unterdrücken kann oder den betreffenden zentralen Einrichtungen eine erneute Spracheingabe signalisieren kann.

8. Fernsprechvermittlungssystem nach einem oder mehreren der vorhergehenden Ansprüche, dadurch gekennzeichnet, dass der betreffende Teilnehmer zur Spracheingabe das in den Handapparat seiner Teilnehmerstation eingebaute Mikrofon ggf. nach vorheriger Betätigung der Steuertaste («Flash-Taste») benutzt.

## Claims

1. A telephone exchange system for private switched networks comprising at least one central dialling information-recording/processing device, where the central dialling information-recording/processing device (2) is preceded by a speech recognition/analysis device (1), characterised in that the speech recognition/analysis device comprises a speech recognition device (11) and an analysis-processor (12), that the speech recognition device (11) includes a first subsidiary device by which an item of dialling information, input in spoken form by a subscriber (TLN), and where appropriate further items of information are recorded and analysed, and a second subsidiary device which converts the analysis result into an item of digital information which it emits to the analysis-processor (12), that an identifier, which is generally provided to carry out charge metering and/or to check on entitlements, supplies the calling or terminal number of a subscriber (TLN) requesting a connection, to the analysis-processor (12) which then checks the target entitlement on the basis of the target request stated by this subscriber, that the analysis-processor (12) includes a speech synthesiser which emits information, statements, instructions etc. in spoken form to the respective subscribers in response to target-information- or telephone service requests input in spoken form, and that in the event of target entitlement the analysis-processor (12) converts the target request of the subscriber (TLN), which has been expressed in the form of digital information, into an information form which is adapted to the central dialling information-recording/processing device (2) which it supplies to the latter, whereupon the respective connection is established in the conventional way as when the target request is input by means of a dialling switch or dialling keyboard.

2. A telephone exchange system as claimed in claim 1, characterised in that the analysis-processor (12) includes special analysis modules for the conversion of standardised target request concepts, for example for "police", "emergency doctor", "weather", "lotto" and the like.

3. A telephone exchange system as claimed in claim 1, characterised in that the analysis-processor (12) includes special modules for the conversion of standardised target request concepts which represent trunk traffic sorting codes, such as for example "USA", "France" or "Columbus Ohio", "Grenoble", or "Frankfurt/Main" etc.

4. A telephone exchange system as claimed in claim 1, characterised in that the analysis-processor (12) includes special modules for the conversion of standardised concepts for telephone services such as "transfer of ringing", "calling waiting", "call repetition", "consultation and call transfer", "charge transfer" etc.

5. A telephone exchange system as claimed in claim 1, characterised in that the analysis-processor (12) includes a list in which the individual entitlements of the subscribers are entered and to which the analysis-processor has access for the purpose of entitlement checking.

6. A telephone exchange system as claimed in claim 1, characterised in that the subscribers (TLN) are assigned individual speech detectors (SD) for detecting specific standardised concepts, such as for example "eight", for the control of an abbreviated dialling code connection establishment, for which purpose as the case may be the speech detectors (SD) input appropriate control signals on the basis of the respective spoken concept either indirectly or directly into the dialling information-recording/processing device (1).

7. A telephone exchange system as claimed in claim 1, characterised in that the subscribers (TLN) are each assigned an individual control key (flash key) which is arranged in or at the subscriber station and by means of which, following speech inputs, the subscriber can suppress further speech input or can signal a new speech input to the respective central devices.

8. A telephone exchange system as claimed in one or more of the preceding claims, characterised in that for speech input the respective subscriber uses the microphone incorporated in the hand-set of his/her subscriber station, where appropriate following prior actuation of the control key (flash key).

**Revendications**

1. Système de commutation téléphonique pour des réseaux téléphoniques automatiques privés comportant au moins un dispositif central d'enregistrement/traitement d'informations de sélection et dans lequel un dispositif (1) d'identification/ d'évaluation de la parole est branché en amont du dispositif central (2) de réception/traitement d'informations de sélection, caractérisé en ce que le dispositif d'identification/d'évaluation de la parole est constitué par un appareil (11) d'identification de la parole et un processeur d'évaluation (12), que l'appareil (11) d'identification de la parole contient un premier dispositif partiel, qui enregistre et analyse l'information de sélection introduite par un abonné (TLN) et éventuellement d'autres informations, et un second dispositif partiel qui convertit le résultat de l'analyse en une information numérique et l'envoie au processeur d'évaluation (12), que le numéro d'appel ou le numéro de raccordement d'un abonné (TLN) souhaitant établir une liaison est envoyé, par un dispositif d'identification présent d'une manière générale pour réaliser la détermination de taxes et/ou le contrôle d'autorisations, au processeur d'évaluation (12) qui contrôle alors, sur la base du souhait d'atteindre une destination exprimé par cet abonné, l'autorisation d'établissement d'une liaison avec cette destination, que le processeur d'évaluation (12) contient un synthétiseur de parole, qui envoie aux abonnés considérés des renseignements, des indications, des instructions, etc. sous forme parlée, sur la base de souhaits, introduits de façon parlée, d'atteindre une destination, d'obtenir des renseignements ou d'utiliser un service téléphonique, et que dans le cas où l'autorisation d'atteindre une destination est accordée, le processeur d'évaluation (12) convertit le souhait de l'abonné (TLN) d'atteindre une destination, exprimé dans l'information numérique, sous une forme d'information adaptée au dispositif central (2) d'enregistrement/traitement d'informations de sélection et l'envoie à ce dispositif, à la suite de quoi l'établissement considéré de la liaison se déroule de façon usuelle d'une manière analogue à l'introduction d'un souhait d'atteindre une destination, au moyen d'un commutateur de sélection ou d'un clavier de sélection.

2. Système de commutation téléphonique suivant la revendication 1, caractérisé par le fait que le processeur d'évaluation (12) contient des modules d'évaluation particuliers servant à réaliser la conversion de termes standardisés désignant des souhaits d'établissement d'une liaison avec une destination, par exemple pour «police», «médecin de secours», «le temps», «loto», et analogues.

3. Système de commutation téléphonique suivant la revendication 1, caractérisé par le fait que le processeur d'évaluation (12) contient des modules spéciaux pour la conversion de termes standardisés désignant des souhaits d'établissement d'une liaison avec une destination, qui représentent des nombreuses caractéristiques de discrimination de trafic à grande distance comme par exemple «USA», «France» ou «Colombus Ohio», «Grenoble» ou «Francfort/Main», etc.

4. Système de commutation téléphonique suivant la revendication 1, caractérisé par le fait que le processeur d'évaluation (12) contient des modules spéciaux pour la conversion de termes standardisés pour des services téléphoniques comme par exemple «retransmission d'appel», «demande d'immixtion», «répétition d'appel», «réclamation et transfert de communication», etc.

5. Système de commutation téléphonique suivant la revendication 1, caractérisé par le fait que le processeur d'évaluation (12) contient une liste, dans laquelle sont recensées les autorisations individuelles des abonnés et auquel le processeur d'évaluation a accès pour le contrôle des autorisations.

6. Système de commutation téléphonique suivant la revendication 1, caractérisé par le fait qu'aux abonnés (TLN) sont associés des détecteurs vocaux individuels (SD) servant à détecter des termes standardisés déterminés, comme par exemple «huit» pour la commande de l'établissement d'une liaison à numéro d'appel abrégé, auquel cas les détecteurs de parole (SD) introduisent le cas échéant des signaux de commande correspondants directement ou indirectement dans le dispositif (1) d'enregistrement/traitement d'informations de sélection, sur la base des termes parlés considérés.

7. Système de commutation téléphonique suivant la revendication 1, caractérisé par le fait qu'à chacun des abonnés (TLN) est associée une touche individuelle de commande («touche flash»), qui est disposée dans ou à côté du poste d'abonné et à l'aide de laquelle l'abonné peut supprimer un autre déclenchement de conversation une fois que le déclenchement d'une conversation a été réalisé ou bien peut signaler aux dispositifs centraux concernés un nouveau déclenchement d'une conversation.

8. Système de commutation téléphonique suivant l'une ou plusieurs des revendications précédentes, caractérisé par le fait que l'abonné concerné utilise, pour le déclenchement d'une conversation, le microphone monté dans le combiné manuel de son poste d'abonné, éventuellement après actionnement préalable de la touche de commande («touche flash»).

TLN

SD

SD

SD

VS

KN

11 | 12

1

V R

2